(19) **Europäisches Patentamt / European Patent Office / Office européen des brevets**

(11) **EP 3 745 886 B1**

(12) **EUROPEAN PATENT SPECIFICATION**

(45) Date of publication and mention
of the grant of the patent:
**25.06.2025 Bulletin 2025/26**

(21) Application number: **19746616.2**

(22) Date of filing: **31.01.2019**

(51) International Patent Classification (IPC):
*A23P 20/10* (2016.01)   *A23P 20/18* (2016.01)
*A23G 1/54* (2006.01)   *A23G 1/10* (2006.01)
*A23J 3/08* (2006.01)   *A23P 10/30* (2016.01)

(52) Cooperative Patent Classification (CPC):
(C-Sets available)
**A23P 10/40; A23C 21/08; A23G 1/0016;
A23G 1/305; A23G 1/40; A23G 1/44; A23G 1/54;
A23J 3/08; A23P 10/30; A23P 20/10; A23P 20/18;**
A23C 2210/40; A23G 2200/06; A23G 2200/08;
A23G 2200/10;                    (Cont.)

(86) International application number:
**PCT/US2019/016136**

(87) International publication number:
**WO 2019/152703 (08.08.2019 Gazette 2019/32)**

(54) **COATED PARTICLE FOR A COMESTIBLE PRODUCT**

BESCHICHTETES TEILCHEN FÜR EIN ESSBARES PRODUKT

PARTICULE ENROBÉE POUR PRODUIT COMESTIBLE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **31.01.2018 US 201862624508 P**

(43) Date of publication of application:
**09.12.2020 Bulletin 2020/50**

(73) Proprietor: **The Hershey Company
Hershey, PA 17033 (US)**

(72) Inventors:
• SANTHANAM, Balaji
**Harrisburg, Pennsylvania 17112 (US)**
• SHAH, Utkarsh
**Hummelstown, Pennsylvania 17036 (US)**
• YOU, Yumin
**Hummelstown, Pennsylvania 17036 (US)**
• TEETS, Dennis
**Grantville, Pennsylvania 17028 (US)**

• BROWN, Burton Douglas
**Hershey, Pennsylvania 17033 (US)**
• WANG, Xiaoying
**Hummelstown, Pennsylvania 17036 (US)**

(74) Representative: **IXAS Conseil
22, avenue René Cassin
69009 Lyon (FR)**

(56) References cited:
EP-A1- 1 106 081         WO-A1-2009/079239
WO-A1-2017/093309     WO-A1-2020/115303
US-A1- 2003 031 768     US-A1- 2013 071 479
US-A1- 2014 199 441     US-A1- 2016 242 432

• GHARSALLAOUI, ADEM ET AL.: "Applications of
spray-drying in microencapsulation
offoodingredients: An overview", FOOD
RESEARCH INTERNATIONAL, 2007, pages 1107 -
1121, XP022256618, doi:10.1016/
j.foodres.2007.07.004

**(Cont. next page)**

(52) Cooperative Patent Classification (CPC): (Cont.)
A23G 2220/20; A23V 2002/00

C-Sets
A23V 2002/00, A23V 2200/12, A23V 2200/22,
A23V 2250/5118

**Description**

**TECHNICAL FIELD**

Embodiments generally relate to a coated particle, methods of preparing a coated particle. Also disclosed but not part of the present invention are methods of using a coated particle. More particularly, embodiments relate to a coated particle for a comestible product to provide a relatively reduced carbohydrate content.

**BACKGROUND**

There has been a recent focus to reduce carbohydrate content, such as sugar content, in comestible products to deliver relatively healthier products to consumers. Some conventional strategies include substituting sugars with ingredients such as polyols and high-intensity sweeteners. Compositions to reduce sugar content in fat-based food products might, however, increase an amount of fat to provide suitable flow characteristics at the expense of desirable dietary fat content. Moreover, few technologies modify the physical structure of sugar at a basic level so that it delivers more sweetness per gram of the sugar. Those that do, such as DouxMatok (Petah-Tikva, Israel), involve the coating of inert silica nanoparticles having a high surface area with sucrose molecules to form a product via hydrogen bonding. Flavor compounds in food ingredients might, however, result in complex and unpredictable flavor profiles such that solutions to address defects with additives might not be applicable to many food particles.

Carbohydrate content in some compositions to reduce sugar content might also be high relative to other components. For example, a sugar component in a mixture might be over 67% by weight of the mixture. In addition, and despite a high relative amount of carbohydrate content, flavor (e.g., short lasting sweetness, too sweet, etc.) and/or texture profiles (e.g., sticky, chalky, etc.) of a composition might nonetheless be unsuitable owing to flavor characteristics (e.g., bitterness, sweetness, etc.) or other properties (e.g., fat content, etc.) of ingredients. Moreover, methods used to make some compositions that reduce carbohydrate content might experience a failure owing to the physical characteristics of ingredients. There is, therefore, considerable room for improvement to provide a coated particle for a comestible product.

Coated particles comprising spherical particles comprising a matrix material of amorphously solidified biopolymer such as starch and protein are disclosed in US 2016/242432 A1.

**BRIEF SUMMARY**

The invention relates to:

- A composition comprising:

  a plurality of coated particles including a food particle coated by a carbohydrate, wherein the coated particles have an average particle size from about 10 μm to about 250 μm, and wherein the coated particles have a surface area fraction of the carbohydrate that is greater than an average weight fraction of the carbohydrate wherein the food particle includes a mixture of cocoa powder and a protein selected from the group consisting of whey protein, soy protein, rice protein, fava bean protein,
  milk protein, and pea protein, and wherein a cocoa nonfat to protein weight ratio is about 3 or greater.

- A method of forming a coated composition comprising: combining a food particle and a carbohydrate to form a spray-drying mixture; selecting the food particle to have a predetermined average particle size and refining the food particle when the food particle does not have the predetermined average particle size; and spray drying the mixture to form a coated composition including a plurality of coated particles and wherein the food particle includes a mixture of cocoa powder and a protein selected from the group consisting of whey protein, soy protein, rice protein, fava bean protein, milk protein, and pea protein, and wherein a cocoa nonfat to protein weight ratio is about 3 or greater.

In some embodiments, the average particle size of the food particles may be less than about 25 μm. The coated particle may have a substantially non-spherical and irregular shape.

Some exemplary embodiments may include food particles including a mixture of cocoa and a protein, wherein said protein is a protein concentrate or a protein isolate. In one example, the protein is at least 90% pure whey protein isolate. In a further example, the protein is milk protein from anon-fat dried milk. The cocoa nonfat to protein weight ratio is about 3 or greater. For example, a cocoa nonfat to whey protein weight ratio may be about 18.4, a cocoa nonfat to soy protein weight ratio may be about 8.7, a cocoa nonfat to rice protein weight ratio may be about 9.3, and a cocoa nonfat to fava bean protein weight ratio may be about 9.3.

Some exemplary embodiments may include sugar as the carbohydrate. In one example, the coated particles are carbohydrate-coated rice starch particles (e.g., sugar-coated rice starch particles) in a white chocolate composition. In another example, the carbohydrate includes sucrose, which may be at least 25% by weight of the carbohydrate. In a further example, the carbohydrate is sugar mixed with 20 dextrose equivalent (DE) corn syrup solids (CSS), maltodextrin, Fibersol-2, maltodextrin, soluble fiber, hydrocolloids, cellulose derivatives, starch hydrolysates, and/or pregelatinized starch. The weight ratio of the food particles to the carbohydrate may be from about 1:1 to about 4:1. The surface area fraction of the carbohydrate may be from about 30% to about 80%.

Embodiments include a method of forming a coated composition. The method includes combining a food particle and a carbohydrate to form a spray-drying mixture. In one example, the food particle and the carbohydrate may be combined in water to form a slurry mixture. The method includes selecting the food particle to have a predetermined average particle size and refining the food particle when the food particle does not have the predetermined average particle size. In one example, the food particle is selected to have an average particle size of less than about 25 $\mu$m. In another example, at least one of two or more types of food particles may be independently refined to have an average particle size of, e.g., less than about 25 $\mu$m when the food particle includes two or more types of food particles. In a further example, a slurry mixture may be refined to provide a refined mixture with particles having an average particle size of, e.g., less than about 25 $\mu$m. The method includes spray drying the mixture to form a coated composition including a plurality of coated particles.

Some uses of the invention may include preparing a comestible product using a coated particle. Some exemplary uses may include preparing a beverage product using a mixture of a bitter component (e.g., cocoa) and a protein. In exemplary uses, a bitter drink may be prepared by, e.g., first leaching out color and flavor (e.g., using water) from a vegetable and then combining extract solids with a water-dispersible protein. A mixture of exudate and protein may optionally be spray-dried with a carbohydrate to form a reduced calorie sweeter drink that advantageously also has relatively reduced bitterness. Among advantages of certain uses are, therefore, a masking of the bitterness of a food particle, a sugar-coated particle substantially free of non-food ingredients, a sugar-coated particle substantially free of non-sugar sweeteners, an improved texture or mouth feel of the food particle, and/or an increased sweetness per gram of sugar in a sugar-coated particle.

## BRIEF DESCRIPTION OF THE DRAWINGS

The various advantages of the embodiments will become apparent to one skilled in the art by reading the following specification and appended claims, and by referencing the following drawings, in which:

FIG. 1 is an example of a method to form a coated composition including carbohydrate-coated particles according to an embodiment;

FIG. 2 is an example of scanning electron microscope images of spray-dried whey protein food particles and of spray-dried sugar-coated whey protein food particles according to an embodiment;

FIG. 3 is an example of a graph of a particle size distribution of the spray-dried sugar-coated whey protein food particles of FIG. 2;

FIG. 4 is an example of scanning electron microscope images of spray-dried cocoa powder, of spray-dried cocoa powder/sucrose/Fibersol-2, and of spray-dried Fibersol-2 according to an embodiment;

FIG. 5 is an example of scanning electron microscope images of spray-dried cocoa powder and of spray-dried cocoa powder/lactose according to an embodiment;

FIG. 6 is an example of scanning electron microscope images of nonspray-dried rice starch and of spray-dried rice starch according to an embodiment; and

FIG. 7 is an example of a diagram of a method to form a coated composition including carbohydrate-coated particles according to an embodiment.

## DESCRIPTION OF EMBODIMENTS

The present invention is defined by the claims. Embodiments not falling within the scope of these claims do not belong to the present invention and are mentioned for reference and information purposes.

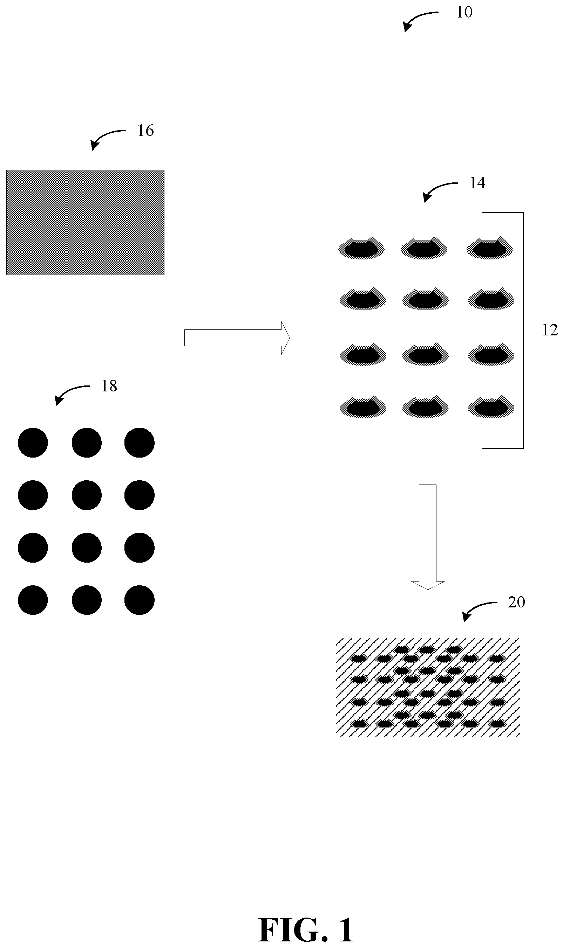

Referring to FIG. 1, a method 10 to form a coated composition 12 including carbohydrate-coated particles 14 is shown according to an embodiment. A machine may implement one or more aspects of the method 10 automatically. For example, an aspect of the method 10 may be implemented by a set of logic instructions stored in a machine- or computer-readable storage medium such as random access memory (RAM), read only memory (ROM), programmable ROM (PROM), firmware, flash memory, 3DXP memory, etc., in configurable logic such as, for example, programmable logic arrays (PLAs), field programmable gate arrays (FPGAs), complex programmable logic devices (CPLDs), or any combination thereof. For example, computer program code to carry out operations shown in the method 16 may be written in any combination of one or more programming languages, including an object oriented programming language such as JAVA, SMALLTALK, C++ or the like and conventional procedural programming languages, such as the "C" programming language or similar programming languages. Additionally, logic instructions might include assembler instructions, instruction set architecture (ISA) instructions, machine instructions, machine dependent instructions, microcode, state-setting data, configuration data for integrated circuitry, state information that personalizes electronic circuitry and/or other structural components that are native to hardware (e.g., host processor, central processing unit/CPU, microcontroller, etc.).

The method 10 includes combining a carbohydrate 16 and food particles 18 to form the carbohydrate-coated particles 14. Any coating process may be used to coat food particles with a carbohydrate. For instance, a coated particle may be produced using a Wurster coater (Freund-Vector Corporation, Marian, IA, USA) or similar processing equipment, which coats particles by suspending the particles in air while causing a coating material to build-up on the exterior of the particle. Particle coating can also be achieved using a Granurex (Freund-Vector Corporation) or similar processing equipment, which coats a particle that is fluidized by movement in a circular track. One coating process includes a spray drying process. In exemplary embodiments, sugar is combined with food particles in water to form a solution or a suspension that is spray-dried to form sugar-coated particles. Notably, coating food particles with sugar increases the surface area of the sugar per gram relative to pure sugar of a similar particle size to deliver more sweetness per gram of sugar. In some embodiments, sugar masks the bitterness or off-taste of food particles, such as in the case of cocoa powder or certain protein food particles. In the illustrated example, the method 10 also optionally includes using the coated composition 12 as a comestible product 20 or as an ingredient that is combined with one or more other ingredients to form the comestible product 20. In one example, the comestible product 20 is a confectionery product (e.g., chocolate, paste, filling, etc.).

In exemplary embodiments, carbohydrate-coated particles are free or substantially free of non-food ingredients. In addition, carbohydrate-coated particles can incorporate flavors and flavor modifiers (e.g., bitter blockers, high potency sweeteners, etc.). Carbohydrate-coated particles may also be free or substantially free of water or may have a water activity of up to 0.6, above which microbial contamination concerns may limit the carbohydrate-coated particles from being a ready-to-eat ingredient. In exemplary embodiments, carbohydrate-coated particles have moisture content less than about 10%, alternatively less than about 5%, by weight of the total weight of a coated composition (e.g., per weight of spray-dried particles). Carbohydrate-coated particles may also have an average particle size selected for a specific application or use.

The average particle size of carbohydrate-coated particles may be selected by, for example, adjusting a nozzle of a two-fluid pneumatic atomizing nozzle in a spray-drying apparatus when a spray drying coating process is used to form spray-dried carbohydrate-coated particles. Atomizing devices for spray drying include, for example, rotary discs, pneumatic nozzles, hydraulic nozzles, sonic nozzles, and variations thereof. In exemplary embodiments, an average particle size of carbohydrate-coated particles may be from about 10 micrometers ($\mu$m) to about 250 $\mu$m, alternatively from about 10 $\mu$m to about 200 $\mu$m, alternatively from about 10 $\mu$m to about 180 $\mu$m, alternatively from about 10 $\mu$m to about 150 $\mu$m, alternatively from about 10 $\mu$m to about 125 $\mu$m, alternatively from about 10 $\mu$m to about 100 $\mu$m, alternatively from about 10 $\mu$m to about 50 $\mu$m, alternatively from about 20 $\mu$m to about 40 $\mu$m, alternatively about 40 $\mu$m, alternatively about 30 $\mu$m, alternatively about 20 $\mu$m, alternatively about 10 $\mu$m. Carbohydrate-coated particles may also have a substantially non-spherical and irregular shape. For example, the shape of carbohydrate-coated particles may be less than 50% spherical and/or more than 50% irregular, alternatively more than 80% irregular.

Food particles may include, but are not limited to, cocoa powder, carob powder, dietary fiber, protein, milk protein isolate, whey protein isolate, casein protein isolate, vegetable protein, vegetable protein isolate, vegetable protein concentrate, vegetable powder, vegetable extracts, protein concentrates, protein isolates, vegetable fiber, insoluble dietary fiber, soluble dietary fiber, a starch, a modified starch, a starch derivative, a hydrocolloid, etc. Food particles may be water-soluble or insoluble in water. Soluble non-sugar ingredients, such as, for example, starches, derivatives of starches, related carbohydrates, related polysaccharides, other food polymers and hydrolysates, such as, for example, proteins, that are amenable to spray-drying and are dispersible in water may serve as suitable food particles for carbohydrate-coated particles formed by spray drying. Food particles may be free or substantially free of sugar and/or free or substantially free of any sweetener. For example, food particles might have sugar content less than about 10%, alternatively less than about 5%, alternatively less than about 1%, by weight of the total weight of the food particles.

In exemplary embodiments, food particles may be very small with a high surface area and act as a carrier for sugar. In exemplary embodiments, an average particle size of food particles is about 50 $\mu$m or less, alternatively about 40 $\mu$m or less, alternatively about 30 $\mu$m or less, alternatively about 20 $\mu$m or less, alternatively about 10 $\mu$m or less, alternatively about 5 $\mu$m or less. The food particles may be, for example, rice starch. In exemplary embodiments, carbohydrate-coated rice starch particles may be suitable for relatively sweet comestible products such as white chocolate. Additionally, the food particles may include a mixture of cocoa and a protein. In exemplary embodiments, the protein is whey protein, soy protein, rice protein, fava bean protein, and/or milk protein. The protein may be isolates or concentrates of proteins. In one example, a cocoa nonfat to protein weight ratio is about 3 or greater. In exemplary embodiments, a cocoa nonfat to whey protein weight ratio is about 18.4, a cocoa nonfat to soy protein weight ratio is about 8.7, a cocoa nonfat to rice protein weight ratio is about 9.3, and a cocoa nonfat to fava bean protein weight ratio is about 9.3. In one beverage example, a bitter drink may be prepared by first leaching out color and flavor (e.g., using water) from a vegetable and then making a combination of extract solids with a water-dispersible protein. A weight ratio of extract solids to protein may be, for example, at least 3. In exemplary embodiments, the vegetable is cocoa. In exemplary embodiments, the protein is derived from whey, soy, rice, and fava bean. In exemplary embodiments, the protein may be isolates or concentrates of proteins.

Material used to coat food particles may be a carbohydrate (e.g., $C_x(H_2O)_y$, where x may be a number different than y). In exemplary embodiments, a carbohydrate has a glass transition temperature ($T_g$) greater than 60 degrees Celsius (°C) dry. For example, a sugar may have a $T_g$ above room temperature. Examples of carbohydrates include but are not limited to sucrose, lactose, maltose, trehalose, corn syrup solids of 40 Dextrose Equivalents (DE) or less, maltodextrins, resistant maltodextrins, Fibersol-2, soluble fibers, hydrocolloids, cellulose derivatives, pregelatinized starch, etc. Thus, in one example, a process for making coated particles includes spray drying a suspension containing an insoluble particle and a film-forming carbohydrate. In exemplary embodiments, carbohydrate-coated particles include food particles and sugar. A sugar may be any monosaccharide or disaccharide. In some embodiments, a sugar is sucrose, maltose, or trehalose. In some embodiments, a sugar is a monosaccharide stabilized by maltodextrin. In some embodiments, a sugar is a sugar polyol, which may be used alone when, for example, its $T_g$ exceeds room temperature. A sugar polyol may include, for example, isomalt, lactitol, lactitol hydrates, maltitol, high maltitol syrup, inulin hydrolysates, etc. In addition, sugar polyols having a $T_g$ less than room temperature may be used when in the presence of, for example, maltodextrin, hydrogenated starch hydrolysates, and so on. Sugars therefore include, for example, sucrose, maltose, trehalose, lactitol, isomalt, a disaccharide, an alcohol of a disaccharide, a dextrose-maltodextrin mixture, a fructose-maltodextrin mixture, a sorbitol-maltodextrin mixture, a xylitol-maltodextrin mixture, an erythritol-maltodextrin mixture, a monosaccharide-maltodextrin mixture, an alcohol of a monosaccharide-maltodextrin mixture, and so on. The physical structure of sugar may be modified by embedding food particles inside a sugar matrix to form sugar-coated particles.

Notably, a carbohydrate covers exterior surfaces of coated particles in an unexpected amount given an average weight fraction of the carbohydrate in the coated particles. For example, a surface area fraction of carbohydrate (e.g., weight fraction of carbohydrate at the particle surface, percentage of particle surface covered by carbohydrate) is greater than an average weight fraction of the carbohydrate in the coated particles. In embodiments of sugar-coated particles that are 50/50 by weight sugar (e.g., in a particle of a weight ratio of 1:1 - nonsugar:sugar), sugar is present on food particle exterior surfaces in a proportion of about 66% or greater of the food particle exterior surfaces area despite being 50% by weight of the sugar-coated particles. In another example where sugar-coated particles are 75/25 by weight sugar (e.g., 3:1 nonsugar:sugar weight ratio), sugar is present on food particle exterior surfaces in a proportion of about 33% or greater of the food particle exterior surface area despite being 25% by weight of the sugar-coated particles. Sugar-coated particles surprisingly deliver more sweetness per gram of sugar-coated particle than a mixture of sugar and nonsugar of the same weight ratio and are advantageous for inclusion into comestible products. Also notably, a weight ratio of food particles to carbohydrate may be about even and more preferably favors the food particles. For example, food particle(s) and carbohydrate(s) may be combined at a weight ratio of about 1:1 to about 4:1, alternatively about 1:1 to about 3:1, alternatively about 1:1, alternatively about 2:1, alternatively about 3:1. However, an average weight fraction of a carbohydrate in coated particles may be 67% or less such as, for example, in a 1:2 weight ratio of food particle(s) and carbohydrate(s).

Accordingly, an advantageous effect of sugar-coated particles is to increase a perception of sweetness by changing a sweetness profile when, for example, a coating material is sucrose and a food particle is bland, soluble in water, and without flavor (e.g., a whey protein isolate, WPI). Additionally, there may be a rapid initial rise in sweetness of a sweetness profile that then lingers to result in the perception of greater sweetness when a sugar-coated food particle is compared to the same weight ratio of a simple mixture of nonsugar and sugar. Meanwhile, an advantage of a spray drying process to form coated particles is that it is possible to mill insoluble particles in the presence of water to an average particle size desirable for coated particles. By contrast, traditional methods would require reducing these particles in the presence of fat using a roll refiner or in the presence of very high air pressure using a jet mill. An example of such a mill is the Boston Shearmill (Admix, Inc., Londonderry, New Hampshire, USA), which is capable of reducing insoluble soft particles down to less than 5 µm.

In one example, a reduced sugar confectionery product with reduced calories may be formed from carbohydrate-coated particles. Also, use of carbohydrate-coated particles might not increase fat content of a confectionery product relative to a conventional confectionery product. Conventionally any attempt to replace sugar results in a fat-based confectionery product that contains more fat to allow it to flow, which is required for manufacturing and for the perception of a smooth and a pleasing mouth feel of the confectionery product. By coating a particle, the particle becomes smooth and results in a fat-based confectionery product that does not require more fat than one with crystalline sugar. An advantage of sugar in a fat-based confectionery product is its density of 1.54 grams per milliliter (g/mL). When incorporated in a fat-based confectionery product at 50% of the total weight of the confectionery product, for example, it takes up less volume than other non-fat ingredients resulting in a fluidity that requires less fat than other non-fat ingredients. By coating a particle, the coated particle has a relatively smooth surface that allows it to flow past its neighbor and has a relatively lower density resulting in no extra fat for suitable flow or mouth feel. Carbohydrate-coated particles may, therefore, be incorporated into any low-moisture food systems. In exemplary embodiments, low-moisture food systems are fat-based. Examples of applications for carbohydrate-coated particles include, but are not limited to, chocolates, fat-based crèmes, confectionery nut butter pastes, and so on.

Aspects of embodiments are further described in the context of the following examples that are presented by way of illustration, not of limitation. Moreover, it should be understood that a machine may implement one or more aspects of the following method(s), and that one or more steps of the following example method(s) may be combined, omitted, bypassed, rearranged, and/or flow in any order. Moreover, any or all steps of the following example method(s) may be manually implemented (e.g., with human intervention, etc.).

Reference Example 1: Spray-dried WPI particle formation.

A control solution was formed by first weighing WPI. The WPI was Hilmar™ 9000 whey protein isolate (Hilmar Cheese Company, Hilmar, CA). Deionized water was weighed and the WPI was added to the water a tablespoon at a time with mixing by a Silverson L4RT high shear mixer (Silverson Machines, Inc., East Longmeadow, MA) until the powder was fully incorporated into the water to minimize foaming, thereby forming a 7.5% by weight control solution of WPI. The WPI dissolved in the water in the sense that the WPI dispersed in the water without forming a sediment. The control solution was refrigerated for about 45 minutes (min) prior to spray drying to minimize the potential for bacterial growth.

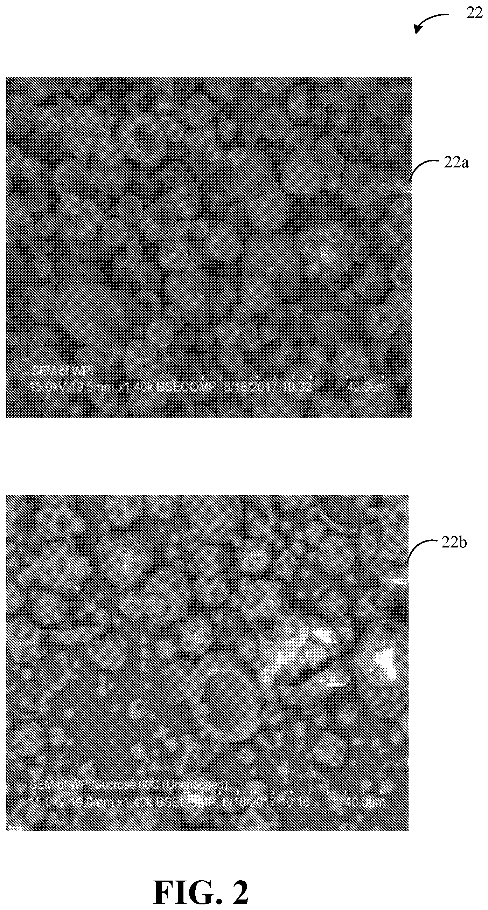

The control solution was then spray-dried with a Buchi mini spray dryer B-290 (Buchi Corporation, New Castle, DE). The inlet temperature was set to 160 °C (320 degrees Fahrenheit (°F)), which provided an outlet temperature of at least 95 °C (203 °F) before solution was pumped into spray dryer and 70 ° C-90° C (158 ° F-194 ° F) while the solution was drying in the spray dryer. The control solution was placed in an ice bath and the supply tube was inserted into the control solution. A fine white powder of the spray-dried food particles was formed in the collection jar of the spray dryer. FIG. 2 shows scanning electron microscope (SEM) images 22 including an SEM image 22a of spray-dried WPI food particles.

Reference Example 2: Sugar-coated WPI particle formation.

Food particles of WPI were coated with sucrose using a lab spray dryer unit. A spray-drying solution was formed by first separately weighing and then mixing together the sucrose and WPI. The sucrose was baker's special sugar (ASR Group, West Palm Beach, FL, USA) having an average crystal size of about 250 μm, although sucrose having other crystal sizes may alternatively be used, as the sugar is dissolved. Confectioner's sugar is preferably avoided, as the sucrose is diluted by starch. The WPI was Hilmar™ 9000 whey protein isolate. Deionized water was weighed, and the powder mixture was added to the water a tablespoon at a time with mixing by a Silverson L4RT high shear mixer (Silverson Machines, Inc., East Longmeadow, MA) until the powder mixture was fully incorporated to minimize foaming, thereby forming a 1:1 by weight spray-drying solution of 7.5 wt% sucrose and 7.5 wt% WPI. The spray-drying solution was refrigerated for about 45 minutes prior to spray drying to minimize the potential for bacterial growth.

The spray drying solution was then spray-dried with a Buchi mini spray dryer B-290 (Buchi Corporation, New Castle, DE). The inlet temperature was set to 160 °C (320 °F), which provided an outlet temperature of at least 95 °C (203 °F). The spray-drying solution was placed in an ice bath and the supply tube was inserted into the spray-drying solution. A fine white powder of the sugar-coated particles was formed in the collection jar of the spray dryer when the outlet temperature of the spray dryer was 70° C-90 ° C (158 ° F-194 ° F). FIG. 2 shows an SEM image 22b of spray-dried sugar-coated WPI food particles.

Reference Example 3: Sugar-coated WPI particle characterization.

The spray-dried sugar-coated WPI particles were characterized to determine their particle size distribution, their surface content of sugar, and their relative taste characteristics.

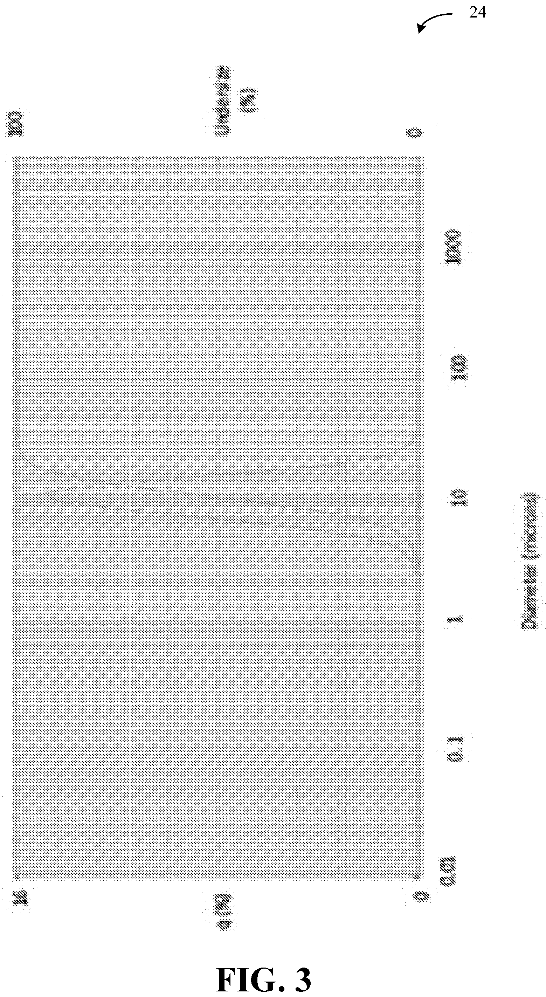

FIG. 3 shows a graph 24 of particle size distribution of a sample of the spray-dried sugar-coated WPI particles. A Horiba LA-960 (Kyoto, Japan) particle size analyzer outfitted with diode light source was used to determine the particle size distribution by laser diffraction. The Horiba was first charged with a medium-chain length triglyceride (Neobee® M-5, Stepan Company, Northfield, IL). The oil was circulated through the cell and the response was set to blank. The spray-dried material was slowly added until the target concentration-response of 70%-80% transmittance was reached. The particle size distribution was then measured while circulating the suspension through the measurement cell. The mean sugar-coated WPI particle size was measured to be 10.53 μm.

Dynamic vapor sorption (DVS) is a gravimetric technique that measures the rate and amount of moisture absorption by a sample. A DVS Advantage (Surface Measurement Systems, Allentown, PA) instrument was used to estimate the surface composition of the sugar-coated WPI particles by measuring the moisture absorption properties of the surface of a particle. The DVS instrument is constructed with a sample holder on one side of a fulcrum and a counterbalance on the other side. The counterbalance weight was selected so that after the sample was added to the sample holder, the net mass between the sample holder and counterweight was less than 50 milligrams (mg). Table 1 shows the results from these measurements.

Table 1: DVS Measurement Results

| Sample | Composition | Uptake | Surface Sucrose (%) | Surface WPI (%) |
|---|---|---|---|---|
| 1 | WPI | 0.0390 | 0 | 100 |
| 2 | Sucrose (amorphous) | 0.0031 | 100 | 0 |
| 3 | Sucrose (crystalline) | 0.0000 | 100 | 0 |
| 4 | 1:1 (15% solids) | 0.0135 | 71 | 29 |
| 5 | 1:1 (15% solids) | 0.01583 | 65 | 35 |
| 6 | 1:1 (25% solids) | 0.0151 | 66 | 34 |
| 7 | 1:3 (15% solids) | 0.027064 | 33 | 67 |

Approximately 60 mg of test material was placed on a previously tared sample holder. The balance was programmed to dry the sample in 200 mL per minute (mL/m) air flow controlled at 0.1% relative humidity (RH) at 25 °C (77 °F) for 6 hours (h). After the drying, during a linear perturbation, the humidity was linearly increased to 15% relative humidity (RH) over a two-hour period of time and then decreased linearly back to 0.1% RH over the subsequent two-hour period of time. The net weight was calculated by subtracting the weight of the sample at the end of the drying from the maximum weight of the sample during the linear perturbation. The specific uptake was calculated by dividing the net weight divided by the sample weight at the end of drying.

The amorphous sugar (sucrose) was created using a table-top cotton candy machine (Cotton Candy Maker, Waring Pro, East Windsor, NJ). Approximately 10 mL of baker's special sugar was added to the center of the hollow spinning disk. The cotton candy machine was turned on, causing the spinning disk to start spinning and to be heated underneath. In about five minutes, the machine formed cotton candy by forming small strands coming out of the spinning disk which immediately cooled and collected in the bowl around the spinning disk as amorphous sugar. Approximately 60 mg of cotton candy was immediately collected and placed in the DVS sample holder, which was placed into the DVS for analysis by the gravimetric technique.

The specific uptake for crystalline sugar was observed to be zero. The specific uptake for WPI was 0.0390 and for amorphous sugar was 0.0031, indicating that the method differentiated between WPI, amorphous sucrose and crystalline sucrose. The specific uptake for the spray-dried sucrose-WPI blends would then have only a portion of the exterior composed of each chemical entity. The ratio of each chemical entity on the surface was estimated as a linear combination of the specific uptake response of each chemical entity. The linear estimate then was the estimate for the proportion of each chemical entity on the spray-dried particle surface.

Table 1 shows that the effective amount of sugar at the surface of a spray-dried sugar-coated WPI particle was greater than the average amount of sugar in the spray-dried sugar-coated WPI particle. Despite being only 50% by weight sucrose, a 1:1 spray-dried sugar-coated WPI particle was determined to have a surface that was about 2/3 sucrose. Despite being only 25% by weight sucrose, a 1:3 spray-dried WPI sugar-coated particle was determined to have a surface that was about 1/3 sucrose. Since the perceived sweetness of a particle is presumably a function of the amount of sugar at the surface of the particle, these spray-dried sugar-coated WPI particles would be expected to taste sweeter than a physical mixture of WPI powder and 10X powdered sugar at the same weight ratio of WPI to sucrose.

Sensory taste tests were conducted to evaluate the sweetness intensity and the level of long-lasting sweetness of the spray-dried sugar-coated WPI particles in comparison to a corresponding 1:1 by weight blend of 10X powdered sugar and spray-dried WPI. Four out of five human taste testers identified the spray-dried sugar-coated WPI particles as being sweeter and having a longer-lasting sweetness than a 1:1 by weight blend of 10X powdered sugar and spray-dried WPI. The 1:1 by weight blend of 10X powdered sugar and spray-dried WPI had a delayed sweetness that tapered off more quickly than the spray-dried sugar-coated WPI particles, which had a sweetness that was detected immediately by the human taste testers. The human testers did not report a clumping of the powder in the mouth.

Example 4: Measurement by surface composition.

A DVS instrument (Surface Measurement Systems, Allentown, PA, USA) was operated at 25 °C. A 50 $\mu$m-100 $\mu$m sample was spread onto an aluminum foil pan 1.0 centimeter (cm) in diameter (made from heavy duty aluminum foil of 1.5 cm diameter) and supported on a 0.4 g wire holder. The sample was first dried at 0.1%RH for 18 h ($w_i$), followed by humidification at 15% RH for 6 h ($w_e$). Surface adsorption was calculated as follows:

$$(w_i - w_e)/ w_e \approx MCdb(15\%RH)$$

$$(1)$$

where MCdb(15%RH) is the dry basis moisture content at 15% relative humidity. Table 2 shows the results from these measurements.

Table 2: Surface Adsorption Results

| Material | $(w_i - w_e)/ w_e$ | MCdb(15%RH) |
|---|---|---|
| Crystalline mannitol | 0 | 0 |
| Starch | 4.9% | 3-8% |
| Crystalline sucrose | 0 | 0 |
| Sucrose-fibersol 2 (1:1) | | --- |
| Sucrose-maltodextrin DE 10 (1:1) | 2.2% | --- |
| Cocoa powder 10%-12% fat | 3.03% | 4-5% |
| Whey protein isolate | 4.0% | --- |
| 10x sugar | 0.123% | --- |

Example 5: SEM of particles and interior characterizations.

A powder is encased in an adhesive of epoxy with hardener (5.0 g Epoxy with 0.6 g hardener). The adhesive is used to coat the bottom of a BEEM® (Better Equipment For Electron Microscopy, Inc., Pennsylvania, USA) embedding capsule. Powder is added to the capsule and the capsule backfilled with adhesive and allowed to cure for 24 h. The capsule is cut by a razor blade and then thin layer cut using a microtome (Leica RM 2245, Wetzlar, Germany). The cut layer with particles are identified by a change in color to that of the brown powder. The samples are attached to a stub with adhesive tape and placed into the SEM chamber. The SEM chamber is set nominally to 80 Pascals and the sample imaged at varying magnifications. If powder is not observed in imaged slice, additional slices are generated and imaged.

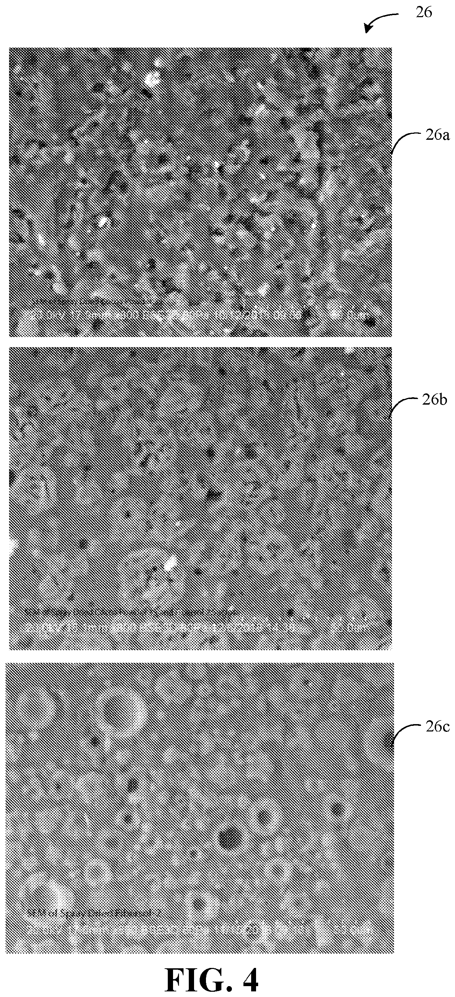

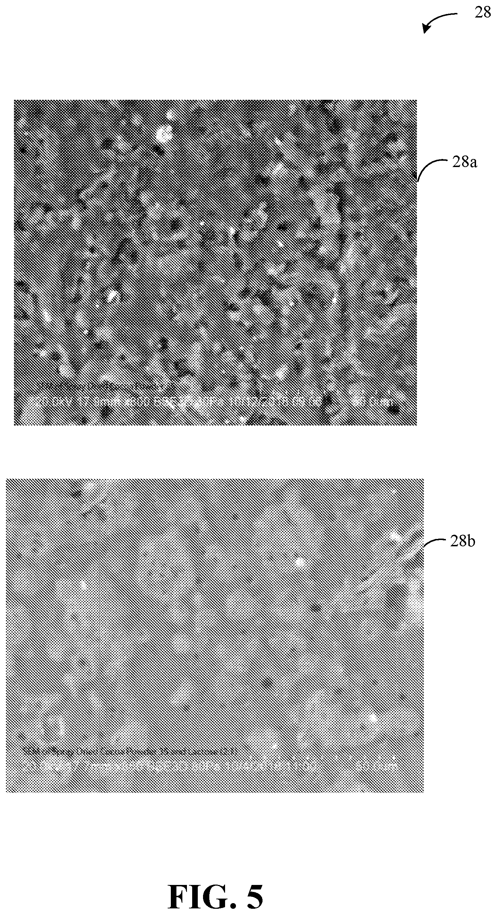

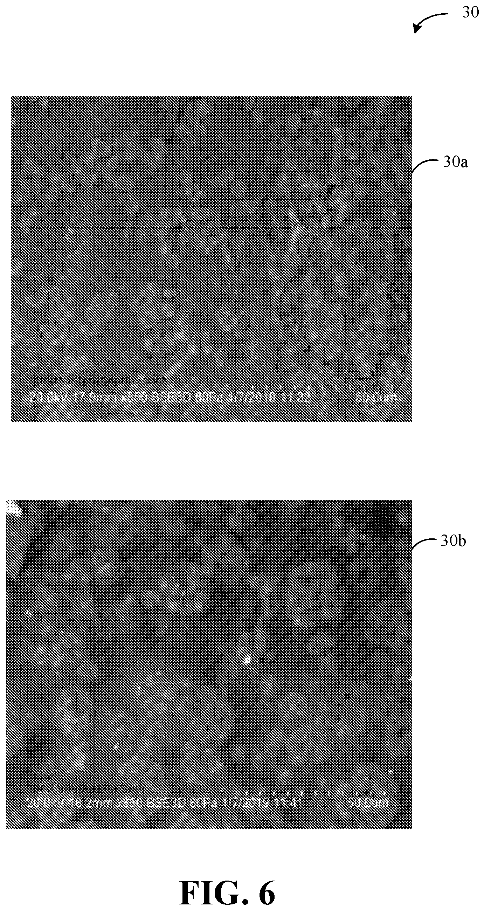

FIG. 4 shows a group of SEM images 26 including an SEM image 26a of spray-dried cocoa powder 35, an SEM image 26b of spray-dried cocoa powder 35/sucrose/Fibersol-2, and an SEM image 26c of spray-dried Fibersol-2. FIG. 5 shows a group of SEM images 28 including an SEM image 28a of spray-dried cocoa powder 35 and an SEM image 28b of spray-dried cocoa powder 35/lactose (2:1). FIG. 6 shows a group of SEM images 30 including an SEM image 30a of nonspray-dried rice starch and an SEM image 30b of spray-dried rice starch-sucrose (dry weight ratio of 2:1 of rice starch to sucrose). Notably, cocoa has a darker image in SEM than sucrose or Fibersol-2 and sucrose. The spray-dried cocoa/sucrose/-fibersol-2 is not spherical but actually has a rather uneven surface and the interior is filled with cocoa. This uneven surface is also observed with spray-dried cocoa and lactose. Meanwhile, spray-dried Fibersol-2 is quite spherical and hollow. The nonspray-dried rice starch shows particles that have cross-section distances of around 5 $\mu$m and they are loosely spread over the image. By contrast, the spray-dried mixture of rice starch and sucrose displays clumps that range from 5 $\mu$m to 25 $\mu$m in cross-sectional distance.

Example 6: Glass transition of the powder.

About 10 mg-15 mg of powder is added to a T-zero pan, compacted to the bottom and sealed with a T-zero hermetic lid (TA Instruments, New Castle, Delaware, USA). The sample is then scanned at 5 °C/min from 25 °C to 100 °C. The glass transition is observed as a step change in heat flow at the inflexion point using Trios software (TA Instruments).

Example 7: Particle size distribution.

A Horiba particle size analyzer (LA-960, Edison, NJ, USA) was operated using Neobee 895 oil (Stepan Specialty Products LLC, Northfield, Illinois, USA) as the continuous phase. The Neobee oil was used once and discarded. The instrument was operated without sonication adding the amount needed to obtain a 80%-90% obscuration. The circular and agitator speeds were each set at speed one to prevent agglomeration of particles during measurement. The data was analyzed according to particle volume and the 50-percentile by volume reported.

Example 8: Observing particles under optical microscope.

A sample of powder was spread onto microscopic slide and a drop of oil was added to the powder. The two were mixed together and then a portion was smeared on a clean portion of the slide. A cover slip was placed over the sample. The sample was examined under 100 and 200 power of magnification using bright light using a binocular light transmission microscope (BX53, Olympus Corporation of the Americas Headquarters, Center Valley, Pennsylvania, USA). The image was collected using an Olympus DP26 digital camera and the image recorded using CellSens (Olympus Corporation).

Reference

Example 9: Solutions at different ratios of lactose and cocoa powder spray-dried.

Cocoa powder was selected to be spray dried with lactose. Table 3 shows the weight ratios of various formulations tested.

Table 3: Weight Ratios of Lactose and Cocoa

|  | 2:1 maltodextrin M100/sucrose | 1:1 cocoa powder/ lactose | 2:1 cocoa powder/lactose | 3:1 cocoa powder/lactose | cocoa powder |
|---|---|---|---|---|---|
| Cocoa powder | 0 | 15% | 15% | 15% | 15% |
| Lactose | 0 | 15% | 7.5% | 5% | 0 |
| Sucrose | 11.7% | 0 | 0 | 0 | 0 |
| Maltodextrin M100 | 23.3% | 0 | 0 | 0 | 0 |
| Water | 65% | 70% | 77.5% | 80% | 85% |

Standard spray drying conditions were employed. Table 4 shows the spray drying conditions of inlet air temperature, feed liquid pump, atomizing air flow (Q-flow), nozzle cleaner, cap size, tip size, cap gap, and cleaning needle size. By turning the nozzle cap ½-revolution, it brought the opening of the annular air flush with the opening for the liquid. This facilitated a narrower plume of spray, which increased particle size and resulted in more spherical particles.

Table 4: Spray Drying Conditions

| Variable | Set-point |
|---|---|
| Inlet air temperature, °C | 165 |
| Feed liquid pump, % | 30 |
| Aspirator | 100 |
| Q-flow | 40 |
| Nozzle cleaner, seconds per interval | 2 |
| Nozzle cap size, mm | 1.5 |
| Nozzle tip size, mm | 0.7 |
| Cleaning needle size, mm | 0.7 |
| Nozzle cap gap, turns | 0.5 (nozzle cone was opened ½ turn from fully closed) |

Table 5 shows the operating conditions of inlet temperature, outlet temperature, and vacuum pressure.

Table 5: Operating Conditions

| Operating Conditions | Values |
|---|---|
| Inlet temperature, °C | 162±5 |
| Outlet temperature, °C | 85±15 |
| Vacuum, mbar | 55±5 |

Coated particles were characterized. Table 6 shows the glass transition, particle size, surface adsorption, and surface area coverage fraction for coated particles from a carbohydrate.

| | 2:1 maltodextrin M100/sucrose | 1:1 cocoa powder/ lactose | 2:1 cocoa powder/ lactose | 3:1 cocoa powder/ lactose | cocoa |
|---|---|---|---|---|---|
| Glass transition, inflexion °C | 55 | 50 | 50 | 50 | nd |
| Particle size distribution, D(v,0.5) | 20 | 18 | 17.9 | 17.3 | 10 |
| Surface adsorption | 0.0213 | 0.0216 | 0.0230 | 0.0269 | 0.0303 |
| Surface Sugar, % | 100% | 100% | 83% | 39% | 0% |
| Oral texture of particle dispersed in solidified cocoa butter | ND | Clumping | Reduced clumping | Minimal clumping | ND |
| Oral-tasting-composition: ratio of cocoa butter to spray dried particle | ND | 30:70 | 32.68 | 40:60 | ND |

Optical microscopy images in mineral oil and lecithin showed a dark interior and a smooth exterior. Cross-sectional SEM images showed a darker interior with a lighter exterior. When suspended in 30% cocoa butter, the 2:1 cocoa powder/lactose composition was flowable, but the 3:1 cocoa powder/lactose composition was relatively pasty indicating that additional fat might be needed in order for it to be processed into a chocolate bar (when a bar is desired). The oral texture of the spray-dried particles dispersed in solidified cocoa butter sought to address whether the cocoa powder which was evident on the surface of the spray-dried particle was also impacting on the particle as it dispersed in the mouth.

When the cocoa was not evident on the surface, the particles were observed to clump leading to a lumpy mouth feel. By contrast, an 82% cacao chocolate made with crystalline sugar does not clump and has a smooth melt down. At 2:1 and 3:1 formulations in Table 6, there was progressively less clumping. This was surprising considering that WPI-sucrose was not reported to clump in the mouth in Examples 2 and 3 when 67%-70% of the surface was sucrose, midway between the lactose coverage of 2:1 and 3:1 formulation in Table 6 of 83% and 39%, respectively. Clumping, therefore, may be addressed at least in part by having carbohydrate (e.g., sugar) cover from about 30% to about 80% of the surface of a particle (e.g., on about 30% to about 80% of an exterior-facing surface of a food particle). Clumping may also be addressed by having an identity (e.g., structural property, functional property, etc.) of the reminder of a coated particle be more similar to that in a particle such as WPI. Notably, the flavor of the spray-dried powders containing cocoa were quite bitter.

Reference Example 10: Bitterness from spray-dried cocoa.

Two suspensions of lactose and cocoa powder were prepared in water. Table 7 shows the measurements of various formulations tested and manufacturing conditions tested.

Table 7: Measurements of Lactose and Cocoa Suspensions and Manufacturing Tested

| Ingredient | 10.1 | 10.2 | 10.3 | 10.4 |
|---|---|---|---|---|
| Cocoa powder, g | 75 | 75 | 35 | 35 |
| Lactose, g | 75 | 75 | 35 | 35 |
| Water, g | 850 | 850 | 130 | 130 |
| Mixing device | High shear mixing for 5 m | Hand whisk for 1 m | High shear mixing for 5 m | Hand whisk for 1 m |
| Spray drying time, min | 120 | 120 | 20 | 20 |

The spray dryer set-points and operating conditions were the same as in Example 9. Powders were then tasted directly. Spray-dried powders were ranked in bitterness from greatest to least as follows: 10.1, 10.2, 10.3 and 10.4. Both high shear mixing and time of spray drying contributed to the bitterness of the spray-dried powder.

Reference Example 11: Spray drying compared with roller refining.

Spray drying set-up was the same as in Example 9. Table 8 shows the operating conditions of inlet temperature, outlet temperature, and vacuum pressure.

Table 8: Operating Conditions

| Operating Conditions | Values |
|---|---|
| Inlet temperature, °C | 164 |
| Outlet temperature, °C | 82-86 |
| Vacuum, mbar | 58 |

Table 9 shows the formulation of the feed suspension including cocoa powder (with sub-composition), sugar, maltodextrin, and water.

Table 9: Formulation of Feed Suspension

| Ingredient | Sub-composition | Sub amt, % | w, g | Fat, g | Dry mass, g | X, g/g-db | Final, g/g |
|---|---|---|---|---|---|---|---|
| Cocoa powder | | | 13.3 | | 12.77 | 0.4575 | 43.9% |
| | Fat | 11% | | 1.47 | | | 5.1% |
| | Water | 4% | | | | | |
| Sugar | | | 5.2 | | 5.18 | 0.1856 | 17.8% |
| | Water | 0.3% | | | | | |
| Maltodextrin M100 | | | 10.6 | | 9.96 | 0.3569 | 34.3% |
| | Water | 6% | | | | | |
| Water, deionized | | | 70.9 | | 0 | | 4% |
| Total | | | 100.0 | | 27.91 | 1.0000 | 100% |

Table 10 shows a characterization of a spray-dried finished powder compared to a roll refined mass.

Table 10: Comparison of Spray Dried Coated Particles and Roll Refined Mass

| Property | Spray-Dried | Roll Refined |
|---|---|---|
| Optical microscope | Particles are irregular in shape lacking sharp angles. | Particles are irregular in shape with sharp angles. |
| Glass transition, °C | 68 | ND |
| Surface adsorption | 0.018 | ND |
| Particle size distribution | Mono-modal distribution by volume centered at 14 μm | Bimodal distribution in volume with one mode centered at 10 μm and the other at 50 μm |

The same composition was roll refined to 20 μm. Refined crumb was dispersed into mineral oil and dropped into jaw of a Fowler Micrometer (Japan) and tightened to maximum torque. Table 11 shows the formulation of the roll refined composition.

Table 11: Formulation of Roll Refined Composition

| Ingredient | Amount |
|---|---|
| Cocoa powder | 34.4% |
| Sucrose, crystalline | 13.3% |
| Maltodextrin, M100 | 27.2% |
| Cocoa butter | 25.1% |

Chocolates were prepared from the roll refined composition (Table 11) and the spray-dried composition (Table 9). Table 12 shows a comparison of the formulations and flow properties of the spray-dried composition and the roll refined composition.

Table 12: Comparison of Spray Dried Composition and Roll Refined Composition

| Ingredient | Spray-Dried | Roll Refined |
|---|---|---|
| Spray dried powder | 70 | -- |
| Refined mass | -- | 93 |
| Cocoa butter | 30 | 7 |
| Fat, % | 33.5% | 33.9% |
| Flow properties at 40°C | Flowable | Pasty, not flowing |

Reference Example 12: Spray drying rice protein with sugar.

Table 13 shows the formulation of the feed suspension including rice protein, sugar, and water.

Table 13: Formulation of Feed Suspension Including Rice Protein

| Ingredient | Amount |
|---|---|
| Oryzatein Rice Protein Silk 90 (Axiom Foods Inc., Los Angeles, California, USA) | 20 g |
| Sugar | 11.7 g |
| Deionized water | 170 g |

Table 14 shows the spray drying conditions of inlet air temperature, feed liquid pump, atomizing air flow (Q-flow), nozzle cleaner, cap size, tip size, cap gap, and cleaning needle size.

Table 14: Spray Drying Conditions

| Variable | Set Point |
|---|---|
| Sanitizing food contact parts | Rinse in 70% ethanol solution |
| Inlet temperature, °C | 160 |
| Air flow, Q-flow | 40 |
| Vacuum, mbar | 54 |
| Nozzle tip, mm | 0.7 |
| Nozzle cleaner, seconds per interval | 7 |

The particle size distribution of the rice protein received was 325 mesh and consisted of 84% protein, 0.8% fat and less than 5% moisture. The Q-flow and nozzle cleaner cycles were chosen to keep the suspension from clogging the spray dryer atomizing nozzle. Fine particles with an average particle size of 20 μm were produced.

Reference Example 13: Preparation of 1000 ppm stock solution of Stevia.

Stevia stock solution was prepared as follows. 100 mg of Purefruit Plus natural sweetener system (monk fruit extract & Stevia extract), obtained from Tate & Lyle (London, United Kingdom), was dissolved in 100g deionized water to prepare 1000 ppm stock solution.

Reference Example 14: Preparation of 1000 ppm stock solution of ClearTaste.

ClearTaste stock solution was prepared as follows. 200 mg ClearTaste powder (MycoTechnology Inc., Aurora, Colorado, USA) was added to 200 g deionized water to prepare 1000 ppm stock solution.

Reference Example 15: Spray drying cocoa, lactose, and flavor modifiers.

Table 15 shows the formulation of the feed suspension including cocoa, lactose, and flavor modifiers Stevia and ClearTaste. The slurry batch included water preheated to 73°C.

Table 15: Formulation of Feed Suspension Including Flavor Modifiers

| Ingredient | 15.1-control | 15.1 | 15.2 | 15.3 | 15.4 | 15.5 |
|---|---|---|---|---|---|---|
| Stevia, ppm (in powder) | 0 | 0 | 200 | 200 | 200 | 240 |
| ClearTaste, ppm (in powder) | 0 | 150 | 0 | 400 | 200 | 120 |
| Lactose, g | 23.3 | 23.3 | 23.3 | 23.3 | 23.3 | 23.3 |
| Cocoa powder, g | 46.7 | 46.7 | 46.7 | 46.7 | 46.7 | 46.7 |
| 1000 ppm Stevia solution, g | 0 | 0 | 14 | 14 | 14 | 16.8 |
| 1000 ppm ClearTaste solution, g | 0 | 10.5 | 0 | 28 | 14 | 8.4 |
| Water, g | 130 | 119.5 | 116 | 88 | 102 | 104.8 |
| Total, g | 200 | 200 | 200 | 200 | 200 | 200 |

The spray dryer set-points were as follows: inlet temperature 160°C; aspirator 100%; pump 30%; nozzle Cleaner 2-second interval. Table 16 shows measurements for the spray-dried formulations with flavor modifiers.

Table 16: Measurements For Formulations Including Flavor Modifiers

| Measurements | 15.1-c | 15.1 | 15.2 | 15.3 | 15.4 | 15.5 |
|---|---|---|---|---|---|---|
| Number of batches of slurries spray dried | 5 | 6 | 6 | 5 | 4 | 4 |
| Batch weight, g | 200 | 200 | 200 | 200 | 300 | 300 |
| Average time from mixing to end spraying slurry batch | -- | 31 | 29 | 34 | 45 | 42 |
| Inlet temperature, °C | -- | 159 | 160 | 160 | 160 | 149 |
| Outlet temperature, °C | -- | 85 | 82 | 85 | 83 | 77 |
| Yield | -- | 32% | 36% | 30% | 35% | 37% |
| Glass transition, °C | -- | 68 | 61 | 64 | 65 | 62 |
| Surface properties | 0.024 | 0.024 | 0.024 | 0.024 | 0.024 | 0.024 |
| Water activity | -- | -- | 0.20 | -- | -- | -- |

These formulations were tasted in chocolates and in powders. Tasters reported overwhelming bitterness and did not observe sweetness or cacao in the samples. The samples were also chalky.

Reference Example 16: Spray drying debittered cocoa.

Debittered cocoa had an average particle size of 70 $\mu$m. A 30% solids slurry was prepared (40 g debittered cocoa powder, 20 g lactose, 140 g water). After the spray dryer was set up (same as in Example 9), the beaker is placed on a hot plate (70 °C) and the feed tube was inserted into the slurry. However, the slurry could not flow through the feed tube. 40 g of water was added to the slurry to decrease the solid content to 25%. Flow appeared to improve at the very beginning, but it did not last long and the slurry ultimately failed to flow through the nozzle system. The pressure built up and the feed tube connected to the inlet popped off several times. More water was added to dilute the slurry to 10%, but flow remained unimproved. The nozzle tip was changed to 2.0 mm (maximum available size) and the tube was cleaned but flow remained unimproved. Notably, expected atomization was not observed. Thus, the nozzle was clogged and prevented atomization of the slurry. The debittered cocoa did not change in particle size when dispersed in water. Even if the debittered cocoa could have been spray dried, the particles would have been too gritty for an acceptable chocolate without further particle size reduction.

Reference

Example 17: Creating a coated particle from a coarse insoluble pea protein.

The Silverson L4R bench laboratory mixer with the vertically slotted head (intended for disintegration of vegetable matter) (part no. 7250-HS0001) was used to break up particles below 20 $\mu$m as measured in Example 11. This was accomplished by mixing the slurry for 3 min. The slurry was composed of 2:1 pea protein/lactose of 35% solids in water. The slurry, once ground to less than 20 $\mu$m, was then spray dried through the spray drier configured as described in Example 9. Surprisingly, this process solved the problem of a clogged spray dryer nozzle encountered in Example 16.

Other wet mills, such as Boston Shearmill (Admix, Inc., Londonderry, New Hampshire, USA) can be used to break up vegetable matter to less than 20 $\mu$m. This is surprisingly effective given the difficulty of breaking up vegetable matter when it is dry.

Reference Example 18. Spray drying refined debittered cocoa.

A 35% solids slurry was prepared (solids being 2:1:1 of debittered cocoalsucrose/Fibersol 2). The slurry was processed in the Silverson Mixer to break up the debittered cocoa as in Example 17. Spray drying conditions in Example 9 were used. A chocolate was made with this spray-dried powder designated SDP-18. It was composed of 16% liquor (54% fat), 18.7% cocoa butter, 0.3% lecithin and the 65.0% SDP-18. Tasters reported that it was sweet, fruity, but not cacao or bitter flavor. A lack of cacao flavor was surprising given that liquor usually delivers a strong flavor. The lack of bitterness was as expected from the debittered cocoa.

Reference Example 19: Spray drying cocoa 35 and WPI.

A 35% solids slurry was prepared (195:35:42:25:3 of water/cocoa 35/sucrose/Fibersol-2/WPI). WPI was a typical whey protein isolate (90% protein). The slurry was spray dried according to the conditions in Example 9, producing SDP-19 with about 3.7% fat, 29.7% cocoa nonfat and 2.6% whey protein. A chocolate made was composed of 28.9% liquor (54% fat), 8.8% cocoa butter, 5.4% milkfat, 0.3% lecithin, 0.015% vanillin and 56.6% SPD-19, resulting in a chocolate with 32.1% fat. Tasters judged the chocolate as sweet, bitter, cacao, and mouth drying. This was unexpected since the bitterness of spray-dried cocoa 35 was overwhelming in Example 15, so much that it prevented the perception of any other flavor like sweet or cacao. Thus, a relatively small amount of WPI results in a sample with a desirable cacao-bitter-sweet flavor profile. The sample is not chalky, which was surprising given that SDP-15's (made with lactose as the sugar) were observed to be chalky. The cocoa nonfat to whey protein ratio in the SDP-19 was about 11.4 and in the chocolate was about 18.4 (including the cocoa nonfat in the liquor).

Reference Example 20: Oat fiber and pea fiber.

A 35% solids slurry was made using oat fiber (solids 2:1:1 oat fiber/sucrose/Fibersol-2). At this solid level and after mixing using the Silverson mixer, the slurry was too viscous to pump. After dilution to 22% solids, the slurry remained too viscous to pump. This mixture could not be spray dried. The same was tried with pea fiber (Roquette Pea Fiber I50M, Roquette America Inc., Geneva, IL, USA)) and was also found too viscous to pump. Microscope images showed the pea fiber to have a length to cross-sectional ratio of around 20. This was unexpected, as spray drying with sugar was tested to address viscous nature of fiber.

Reference Example 21: Rice starch.

A sample of RTE rice starch (Remy B7, Beneo Gmbh, Mannheim, Germany) was made into a 40% solids slurry (solids 5:3:2 rice starch/Fibersol-2/sucrose). Rice starch was shown to have a cross section of 4 $\mu$m-7 $\mu$m and appeared roughly spherical (FIG. 30a). The slurry was spray dried (per Example 9). SDP-21 particles included multiple starch granules and had an average size of 16 $\mu$m (FIG. 30b). Surprisingly, if the slurry were 15% slurry and of the same solids ratio, a resulting composition designated SDP-21b had a larger average particle size of 20 $\mu$m. A white chocolate was made with SDP-21 including 30.0% cocoa butter, 0.24% lecithin, 0.01% PGPR, 0.03% vanillin, 17.75% NFDM, 52% SDP-21. The viscosity was 3000 cP at 20 rpm with a yield stress of 5.2 dyn/cm$^2$. Tasters indicated it was sweet and pleasant and surprisingly lacked the raw starch flavor as would normally be expected for a white chocolate containing 25% starch.

Reference Example 22: 2000 ppm Stevia in cocoa 35 and lactose.

A 35% solids slurry was created (solids 2:1 cocoa 35/lactose) with 2000 ppm Stevia and 80 ppm bitter blocker (same source as in Example 15). The slurry was spray-dried according to the conditions in Example 9. The SDP-22 was tasted as a powder and there was no indication of sweetness from Stevia. Rather, the bitterness of the cocoa completely overwhelmed perception. This was unexpected since 2000 ppm Stevia is about 5-10 times more concentrated than in Example 15 and these results indicated that Stevia could not improve the flavor. The ratio of cocoa 35 to lactose was not considered to impact the perception of bitterness, so that in regards to bitterness a ratio of 2:1 was considered equivalent to 1:1.

Example 23: Non-fat dried milk, cocoa 35, sucrose, com syrup solids, and Stevia.

A 35% solids slurry was created (solids 50:9.1:20.9:20 cocoa 35/NFDM/sucrose/20 DE CSS) creating SDP-23. SDP-23 contained 44.5% cocoa nonfat and 3.5% milk protein with a ratio of cocoa nonfat to milk protein of 12.7. This was made up into a sweet chocolate including 61.8% SDP-23, 4.4% NFDM, 16% liquor, 2% AMF, 15.5% cocoa butter, 0.3% lecithin. This chocolate had 34.8% cocoa nonfat and 3.8% milk protein resulting in a ratio of cocoa nonfat to milk protein of 9.2. Tasters considered the SDP-23-sweet chocolate to be cocoa, sweet, slight bitter, pleasant and mouth drying. A reference chocolate was made without spray drying but of the same components in the same proportion. Surprisingly, the reference chocolate was considered sweeter, with more cacao flavor. The chocolate made with SDP-23 was noted to clump up in the mouth, which likely interfered with the perception of flavors. When 100 ppm Stevia was added to SDP-23 chocolate the tasters considered that it tasted as sweet as the reference chocolate. Surprisingly, milk protein was capable of reducing the bitterness of cocoa to a point where other flavors, such cocoa and sweet, could be perceived. The cocoa nonfat to protein ratio for SDP-19 chocolate was 18.4 compared to 9.2 for SDP-23 chocolate. This was unexpected because milk protein is predominantly casein (around 83%) and casein micelles are larger with less surface area than globular whey protein.

Example 24: Spray dry high protein nut milk with cocoa, sucrose, and M040 maltodextrin.

A slurry was made wherein the water was wholly provided by Silk® (Danone North America, White Plains, NY, USA) high protein nut milk. The nut milk had 10 g of protein, 8 g of fat, and 3 g of carbohydrate in 240-mL. Using a Silverson L4RT high shear mixer, 30 g of cocoa 35, 20 g of crystalline sucrose, and 10 g of M040 Maltodextrin (Grain Processing Corporation, Muscatine, IA, USA) was added to 140 mL of nut milk. After spray drying according to Example 9, the resulting spray-dried particle, SDP-24, contained 37.0% cocoa nonfat and 8.1% protein, resulting in a cocoa nonfat to protein ratio of 4.6. According to the ingredient listing, the nut milk contained filtered almond water, filtered cashew water, pea protein, high oleic canola oil and the remainder of the ingredients were less than 2%. Most of the protein was likely provided by added pea protein. Tasters considered that SDP-24 tasted of cacao, sweet, and slightly bitter, and was considered a pleasant chocolate flavor, if not a bit different from typical milk chocolates. When this particle was first made via spray drying, it was not realized at the time that this composition resulted in a reduction of the bitterness of the cocoa. In revisiting this sample after observations in Example 15, it was surprising how pleasant the flavor was in contrast to that of Example 15.

Example 25: Slurries of cocoa 35 with different vegan and dairy milks.

In order to screen proteins with cocoa, different milk and vegan milks were purchased and combined with cocoa. This was chosen so that all of the water in the mixture was provided by the milk and it was based on a milk formula of 8 g of protein in 240 mL. The general formula was 20 g cocoa and 80 g milks. Table 17 shows the taste response for various slurry formulations including milks.

Table 17: Taste Response for Slurry Formulation Including Milks

| Milk to which cocoa added | Composition in 240 mL | Cocoa nonfat/protein ratio | Taste Response |
|---|---|---|---|
| Silk high protein nut milk | 10 g protein from pea protein; 2g sugar; 8 g fat | 7.0 | Bitter, cacao dissipates |
| Silk original soy milk | 8 g protein; 6 g sugar; 4.5 g fat | 8.7 | Cacao, no bitter |
| Lactaid, 1% low fat milk | 8 g protein; 13 g sugar; 2.5% fat | 8.7 | bitter, sweet, sour |
| Silk cashew milk | < 1 g protein; 0 g sugar; 2 g fat | > 69.1 | Bitter, harsh, astringent, fruity |
| Fat free milk | 8 g protein; 12 g sugar; 0 g fat | 8.7 | Bitter, sour |
| Silk almond milk | 1 g protein; 7 g sugar; 2.5 g fat | 69.1 | Sweet, bitter, astringent |

From the tasting results, protein appeared to interact with cocoa bitter flavorants and prevented their perception. Soy protein reacted with the cacao to effectively reduce bitterness, but milk protein was not nearly as effective. Since WPI was quite effective, casein does not appear to be nearly as effective in addressing bitterness from cocoa in the slurry prior to spray drying. This observation was surprising considering that NFDM in SDP-23 was observed to decrease bitterness of cocoa and provide a pleasant flavor. Surprisingly, Silk high protein nut milk was less effective at reducing bitterness in a slurry than in SDP-24.

Example 26: Slurries of pea, rice, lentil and fava-bean proteins with cocoa.

Slurries of four different proteins were evaluated for their impact on the perception of cocoa 35 flavor in water. Table 18 shows the taste response for various slurry formulations including proteins. In table 18, (*) indicates wet grinding using Silverson L4RT mixer for 3 m at 8000 rpm with a slotted mixing head and (†) indicates wet grinding using Silverson L4RT mixer for 3 m at 8000 rpm with an emulsion mixing head.

Table 18: Taste Response for Slurry Formulation Including Proteins

| Protein/vendor | Composition | Cocoa/protein/DI water | Particle size, μm | Cocoa nonfat/protein ratio | Taste Response |
|---|---|---|---|---|---|
| Pea protein/Glanbia HarvestPro Pea Protein 83EF | 83% protein | 20.6:3.1:76.4 | 14* | 9.0 | Bitter, astringent, harsh, green pasture, rotten, green, sour |
| Rice Protein/Axiom Silk Rice Protein 90 | 84% protein | 20.6:3.0:76.5 | 24† | 9.3 | Cacao, best, least bitter, best flavor, low astringency |
| Lentil protein/Ingredion Vitessence Pulse 2550 | 55% protein | 21.0:4.6:76.4 | 18† (initial 25) | 9.3 | Wood, bitter, lack astringent, beany |
| Fava Bean protein/AGT Deflavored Fava Bean Protein 60 | 60% protein | 20.6:4.1:75.3 | 14† (initial 21) | 9.3 | Cacao, bitter, sour, acceptable |

Rice protein isolate and fava bean protein concentrate were effective in reducing bitterness and astringency of cocoa while allowing the perception of cacao. Surprisingly, pea protein was not effective in the slurry in reducing cocoa bitterness, but according to Example 24, pea protein in SDP-24 was effective in reducing bitterness of cocoa. An application may include a process wherein a finely divided cocoa is leached of flavors and colors in a fashion similar to tea, and the resultant exudate is very bitter. This bitterness can be reduced substantially by adding proteins to the resultant exudate such as soy protein, rice protein, fava bean protein, or WPI resulting in a palatable and/or refreshing drink.

Example 27. Example Food Particle.

One function of a coated particle is to replace sugar in fat-based systems while minimally increasing the fat content. Clumping in the mouth might be observed when a surface contains more than 66%-71% sugar. When sugar was 66%-71% of the surface (with WPI), however, the coated particle delivered a flavor of sweeter than a similar composition chocolate made solely by roll refining. In another example, a 2:1 cocoa to lactose formulation had 83% of the cocoa surface covered by lactose while with a 3:1 cocoa to lactose formulation had 39% of the cocoa surface covered by lactose wherein clumping was progressively less but not eliminated. This indicates that a coated particle more like WPI and less like cocoa may prevent clumping during mastication in the mouth.

Meanwhile, a coated particle containing cocoa 35 as the core might have overwhelming bitterness. When choice of protein and its ratio with cocoa nonfat is sufficient (cocoa nonfat to protein ratio of at least 3), then the bitterness and astringency of cocoa was reduced to acceptable levels allowing the perception of sweet and cacao flavors. For instance, bitterness and astringency was reduced when the ratio of cocoa nonfat to WPI in chocolate was 18.4, when the ratio of cocoa nonfat to soy protein was 8.7, when the ratio of cocoa nonfat to rice protein was 9.3, when the ratio of cocoa nonfat to fava bean protein was 9.3, when the ratio of cocoa nonfat to Silk® high protein milk protein is 4.6, and when cocoa nonfat to NFDM protein is 9.2. The protein portion of the milks and extracts, and not the fat portion, reduced bitterness. A chalky texture might also be observed in a coated particle with lactose as the coating agent. The low solubility of lactose lent to its texture perception of chalky. When the coating agent was instead sugar with 20 DE CSS, maltodextrin or Fibersol-2, the coated particle did not taste chalky.

Accordingly, a coated particle may have about 66% to about 70% of sugars on a particle surface, preferably greater than about 30% and less than about 100%, preferably less than about 83%, which can be achieved partly when the core is insoluble such as cocoa or completely dispersible with a large, easily dispersible molecule such as whey protein. To control bitterness and astringency when cocoa is used as the core, the cocoa nonfat to protein ratio is preferably greater than 3, more preferably greater than 5, and most preferably greater than 7. A preferred choice of protein is a storage protein or a globular protein compared to largely insoluble proteins for water dispersions. In spray-dried particles, additionally milk protein with a mixture of globular and micellar proteins and pea protein, which is largely insoluble, are useful in reducing bitterness and can be used in fat-based confections. Globular proteins such as soy protein, rice protein, whey protein and fava bean protein might be preferable. Milk protein (at 1/10th the weight of cocoa nonfat) might not be as effective as preferred proteins but can reduce the bitterness and astringency such that sweetness and cacao can be perceived. The off-flavors from proteins should be minimal, and proteins should taste bland. To spray dry powders, it might be preferable to reduce particle size to under 20 $\mu$m. Wet grinding prior to spray drying accomplishes this size reduction. Finally, sugar might be replaced with rice starch and produce an acceptable tasting, less sweet white chocolate. This addresses a problem with white paste (e.g., too sweet taste).

Notably, bitter compounds in cocoa include three groups. The first group is the methyl xanthans or alkaloids, such as theobromine, caffeine and 2,5-diketopiperazines. The second group is phenols (for instance, epicatechin and catechin) and procyanidins (DP 2-10). The third group is polyphenols, $\gamma$-aminobutyric acid, polyphenol glycosides, and polyphenols amino acid conjugates. Thus, solutions to address bitterness in other bitter compounds might not necessarily work in cocoa. Table 19 shows a summary of examples for coated particles.

Table 19: Examples for Coated Particles (Spray Dried Particles, SDP)

| Formulation | Defect | Example Solution | Preferred | Type |
|---|---|---|---|---|
| Cocoa as core in SDP used in chocolate | Bitter and astringent SDP | Add protein | Ratio of cocoa nonfat to protein, at least 3, at least 5 and preferably at least 7 | Preferred globular proteins (soy, rice, fava bean and whey), acceptable milk proteins, pea protein |
| Cocoa in a slurry | Bitter and astringent liquid | Add protein | Ratio of cocoa nonfat to protein, at least 3, at least 5 and preferably at least 7 | Preferred globular proteins (soy, rice, fava bean and whey), |
| Lactose as coating in SDP | Chalky SDP | Use more soluble sugars such as sucrose for part of sugars | Composition of the SDP (or bulk) should be at least 25% sucrose, alternatively at least 33% sucrose, alternatively at least 50% sucrose | |

| | | | | |
|---|---|---|---|---|
| Sugars as coating in SDP | In SDP, particles clump together when masticated in the mouth and release flavors poorly perceived as less sweet, etc. | Keep sugars on surface to between greater than 20% and less than 100%, between 30% and 85%, most preferably between 60% and 75%. | | |
| SDP are sticky | Sucrose is the only coating agent in SDP | Combine sucrose with 20 DE CSS, maltodextrin, fibersol-2 | In the composition of the SDP, sucrose should be no greater than 65%, preferably no greater than 50%, and most preferably no greater than 33% of shell | In the composition of the SDP (or bulk), starch hydrolysate DE is most preferably not higher than 20 DE, preferably not higher than 25 DE, least preferably not higher than 36 DE |
| White chocolate with SDP | Excessive sweetness of white chocolate | Use bland core materials which are white | Preferably Rice starch | |
| Core material candidates are too coarse to spray dry for SDP | Particles are too large and clog spray nozzle for slurries intended to be spray dried | Wet grind to reduce particles to less than 20 μm, acceptable less than 25 μm | Insoluble proteins (pea proteins, zein protein), debittered cocoa, insoluble plant materials (vegetable matter, seeds) | |

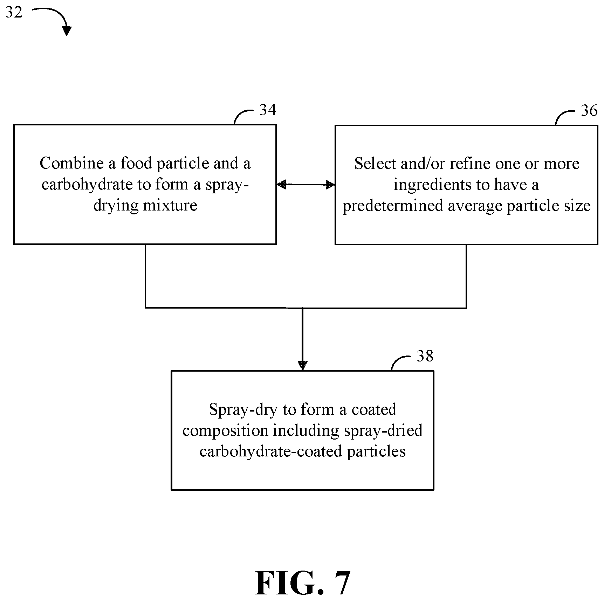

Turning now to FIG. 7, a method 32 to form a coated composition including carbohydrate-coated particles is shown according to an embodiment. An aspect of the method 32 may include one or more aspects of the method(s) discussed above. For example, one or more aspects of the method 32 may include one or more aspects of the method 10 (FIG. 1), already discussed, or one or more aspects of the Examples 1-27, already discussed. In addition, one or more aspects of the method 32 may be automatically and/or manually implemented.

Block 34 combines a food particle and a carbohydrate to form a spray-drying mixture. A solvent, such as water, may be used to generate a slurry mixture. In one example, the water is potable water (e.g., deionized water, treated water, water that is safe to drink, etc.). In another example, the water is from a beverage (e.g., milk, a juice such as orange juice, etc.). Block 36 refines at least the food particle when the food particle does not have a predetermined average particle size. The predetermined size may be, for example, less than about 25 $\mu$m. When the food particle includes a combination of two or more types of food particles (e.g., cocoa powder and protein powder), block 36 may independently refine at least one of the two or more types of food particles to have the predetermined average particle size. Block 36 may also refine the mixture. Block 36 may further select one or more individual ingredients to have the predetermined average particle size and/or refine ingredients together, individually, or combinations thereof. Block 40 spray-dries to form the coated composition including spray-dried carbohydrate-coated particles. In one example, block 40 spray-dries a slurry mixture when the food particle(s) and/or ingredients have the predetermined average particle size.

It should be understood that percentages discussed herein with regard to a component relates to a weight by weight (w/w) basis for illustrative purposes, which is the proportion of a particular substance within a mixture as measured by weight (and/or mass). It should further be understood that ranges appearing in the specification include any value, range, or sub-range there between. It should also be understood that the indefinite articles "a" or "an" carry the meaning of "one or more" or "at least one". As used in this application, a list of items joined by the terms "one or more of", "at least one of", or "selected from the group consisting of" can mean any combination of the listed terms. For example, the phrases "one or more of A, B and C" and "one or more of A, B or C" can mean A; B; C; A and B; A and C; B and C; or A, B and C. Similarly, a list of terms joined by the term "and so on" or "etc." can mean the list is not an exhaustive list and may be any combination of the listed terms. For example, the phrase "A, B, C, and so on" can mean A; B; C; A and B; A and C; B and C; or A, B and C.

**Claims**

1. A composition comprising:
   a plurality of coated particles including a food particle coated by a carbohydrate, wherein the coated particles have an average particle size from about 10 μm to about 250 μm, and wherein the coated particles have a surface area fraction of the carbohydrate that is greater than an average weight fraction of the carbohydrate
   wherein the food particle includes a mixture of cocoa powder and a protein selected from the group consisting of whey protein, soy protein, rice protein, fava bean protein, milk protein, and pea protein, and wherein a cocoa nonfat to protein weight ratio is about 3 or greater.

2. The composition of claim 1, wherein the average particle size of the food particles is less than about 25 μm.

3. The composition of claim 1, wherein one or more of a cocoa nonfat to whey protein weight ratio is about 18.4, a cocoa nonfat to soy protein weight ratio is about 8.7, a cocoa to rice protein weight ratio is about 9.3, or a cocoa to fava bean protein weight ratio is about 9.3.

4. The composition of claim 1, wherein the protein is a protein concentrate or a protein isolate; or wherein the protein is a milk protein from a non-fat dried milk.

5. The composition of claim 1, wherein the carbohydrate is a sugar selected from the group consisting of sucrose, maltose, trehalose, lactitol, isomalt, a disaccharide, an alcohol of a disaccharide, a dextrose-maltodextrin mixture, a fructose-maltodextrin mixture, a sorbitol-maltodextrin mixture, a xylitol-maltodextrin mixture, an erythritol-maltodextrin mixture, a monosaccharide-maltodextrin mixture, and an alcohol of a monosaccharide-maltodextrin mixture.

6. The composition of claim 5, wherein the carbohydrate includes sucrose, and wherein the sucrose is at least 25% by weight of the carbohydrate.

7. The composition of claim 5, wherein the carbohydrate is a sugar and one or more of 20 dextrose equivalent corn syrup solids, maltodextrin, soluble fiber, hydrocolloids, cellulose derivatives, starch hydrolysates, or pregelatinized starch.

8. The composition of claim 1, wherein the weight ratio of the food particles to the carbohydrate is from about 1:1 to about 4:1.

9. The composition of claim 1, wherein the surface area fraction of the carbohydrate is from about 30% to about 80%.

10. The composition of claim 1, wherein the plurality of coated particles have a substantially non-spherical and irregular shape.

11. A method of forming a coated composition comprising:

    combining a food particle and a carbohydrate to form a spray-drying mixture;
    selecting the food particle to have a predetermined average particle size and refining the food particle when the food particle does not have the predetermined average particle size; and
    spray drying the mixture to form a coated composition including a plurality of coated particles and wherein the food particle includes a mixture of cocoa powder and a protein selected from the group consisting of whey protein, soy protein, rice protein, fava bean protein, milk protein, and pea protein, and wherein a cocoa nonfat to protein weight ratio is about 3 or greater.

12. The method of claim 11, wherein the food particle and the carbohydrate are combined in water to form a slurry mixture.

13. The method of claim 11, wherein the food particle is selected to have an average particle size of less than about 25 μm.

14. The method of claim 11, wherein the food particle includes two or more types of food particles and the method further includes independently refining at least one of the two or more types of food particles to have an average particle size of less than about 25 μm.

15. The method of claim 11, wherein the mixture is refined to provide a refined mixture with particles having an average particle size of less than about 25 μm.

**Patentansprüche**

1. Eine Zusammensetzung, umfassend:

eine Vielzahl von beschichteten Partikeln, die ein mit einem Kohlenhydrat beschichtetes Nahrungsmittelpartikel umfasst, wobei die beschichteten Partikel eine durchschnittliche Partikelgröße von etwa 10 μm bis etwa 250 μm aufweisen und wobei die beschichteten Partikel einen Oberflächenanteil des Kohlenhydrats aufweisen, der größer ist als ein durchschnittlicher Gewichtsanteil des Kohlenhydrats,
wobei das Nahrungsmittelpartikel eine Mischung aus Kakaopulver und einem Protein enthält, das aus der Gruppe ausgewählt ist, die aus Molkenprotein, Sojaprotein, Reisprotein, Favabohnenprotein, Milchprotein und Erbsenprotein besteht, und wobei das Gewichtsverhältnis von fettfreiem Kakao zu Protein etwa 3 oder mehr beträgt.

2. Zusammensetzung nach Anspruch 1, wobei die durchschnittliche Partikelgröße der Nahrungsmittelpartikel weniger als etwa 25 μm beträgt.

3. Zusammensetzung nach Anspruch 1, wobei eines oder mehrere der folgenden Verhältnisse vorliegt: ein Gewichtsverhältnis von fettfreiem Kakao zu Molkenprotein von etwa 18,4, ein Gewichtsverhältnis von fettfreiem Kakao zu Sojaprotein von etwa 8,7, ein Gewichtsverhältnis von Kakao zu Reisprotein von etwa 9,3 oder ein Gewichtsverhältnis von Kakao zu Favabohnenprotein von etwa 9,3.

4. Zusammensetzung nach Anspruch 1, wobei das Protein ein Proteinkonzentrat oder ein Proteinisolat ist, oder wobei das Protein Milchprotein aus Magermilchpulver ist.

5. Zusammensetzung nach Anspruch 1, wobei das Kohlenhydrat ein Zucker ist, ausgewählt aus der Gruppe bestehend aus Saccharose, Maltose, Trehalose, Lactit, Isomalt, einem Disaccharid, einem Alkohol eines Disaccharids, einer Dextrose-Maltodextrin-Mischung, einer Fructose-Maltodextrin-Mischung, einer Sorbit-Maltodextrin-Mischung, einer Xylit-Maltodextrin-Mischung, einer Erythrit-Maltodextrin-Mischung, einer Monosaccharid-Maltodextrin-Mischung und einem Alkohol einer Monosaccharid-Maltodextrin-Mischung.

6. Zusammensetzung nach Anspruch 5, wobei das Kohlenhydrat Saccharose enthält und wobei die Saccharose mindestens 25 Gew.- % des Kohlenhydrats ausmacht.

7. Zusammensetzung nach Anspruch 5, wobei das Kohlenhydrat ein Zucker und einer oder mehrere der folgenden Stoffe ist: 20 Dextroseäquivalente Maissirupfeststoffe, Maltodextrin, lösliche Ballaststoffe, Hydrokolloide, Cellulosederivate, Stärkehydrolysate oder vorverkleisterte Stärke.

8. Zusammensetzung nach Anspruch 1, wobei das Gewichtsverhältnis der Nahrungsmittelpartikel zum Kohlenhydrat etwa 1:1 bis etwa 4:1 beträgt.

9. Zusammensetzung nach Anspruch 1, wobei der Oberflächenanteil des Kohlenhydrats etwa 30 % bis etwa 80 % beträgt.

10. Zusammensetzung nach Anspruch 1, wobei die Vielzahl der beschichteten Partikel eine im Wesentlichen nichtsphärische und unregelmäßige Form aufweist.

11. Verfahren zur Herstellung einer beschichteten Zusammensetzung, das umfasst:

Kombinieren einer Nahrungsmittelpartikel und eines Kohlenhydrats, um eine Sprühtrocknungsmischung zu bilden; Auswählen der Nahrungsmittelpartikel mit einer vorbestimmten durchschnittlichen Partikelgröße und Verfeinern der Nahrungsmittelpartikel, wenn die Nahrungsmittelpartikel die vorbestimmte durchschnittliche Partikelgröße nicht aufweist; und

Sprühtrocknen der Mischung, um eine beschichtete Zusammensetzung zu bilden, die eine Vielzahl beschichteter Partikel enthält, und wobei die Nahrungsmittelpartikel eine Mischung aus Kakaopulver und einem Protein enthält, welches aus der Gruppe ausgewählt ist, die aus Molkenprotein, Sojaprotein, Favabohnenprotein, Milchprotein und Erbsenprotein besteht und wobei das Gewichtsverhältnis von fettfreiem Kakao zu Protein etwa 3 oder mehr beträgt.

**12.** Verfahren nach Anspruch 11, wobei die Nahrungsmittelpartikel und das Kohlenhydrat in Wasser zu einer Aufschlämmung vermischt werden.

**13.** Verfahren nach Anspruch 11, wobei die Nahrungsmittelpartikel so ausgewählt werden, dass sie eine durchschnittliche Partikelgröße von weniger als etwa 25 μm aufweisen.

**14.** Das Verfahren nach Anspruch 11, wobei die Nahrungsmittelpartikel zwei oder mehr Arten von Nahrungsmittelpartikeln umfasst und das Verfahren ferner das unabhängige Verfeinern mindestens einer der zwei oder mehr Arten von Nahrungsmittelpartikeln umfasst, sodass diese eine durchschnittliche Partikelgröße von weniger als etwa 25 μm aufweisen.

**15.** Verfahren nach Anspruch 11, wobei die Mischung verfeinert wird, um eine verfeinerte Mischung mit Partikeln bereitzustellen, die eine durchschnittliche Partikelgröße von weniger als etwa 25 μm aufweisen.

**Revendications**

**1.** Composition comprenant :

une pluralité de particules enrobées comprenant une particule alimentaire enrobée par un glucide, les particules enrobées ayant une taille de particule moyenne d'environ 10 μm à environ 250 μm, et les particules enrobées ayant une fraction de surface du glucide qui est supérieure à une fraction de poids moyenne du glucide, dans laquelle la particule alimentaire comprend un mélange de cacao et d'une protéine, la protéine étant choisie dans le groupe constitué par la protéine de lactosérum, la protéine de soja, la protéine de riz, la protéine de fève, la protéine de lait et la protéine de pois, et dans laquelle un rapport pondéral entre le cacao non gras et la protéine est d'environ 3 ou plus.

**2.** Composition selon la revendication 1, dans laquelle la taille moyenne des particules alimentaires est inférieure à environ 25 μm.

**3.** Composition selon la revendication 1, dans laquelle un ou plusieurs des rapports pondéraux sont présents : un rapport pondéral de cacao non gras à protéines de lactosérum d'environ 18,4, un rapport pondéral de cacao non gras à protéines de soja d'environ 8,7, un rapport pondéral de cacao à protéines de riz d'environ 9,3, ou un rapport pondéral de cacao à protéines de fève d'environ 9,3.

**4.** Composition selon la revendication 1, dans laquelle la protéine est un concentré de protéines ou un isolat de protéines, ou dans laquelle la protéine est une protéine de lait provenant d'un lait écrémé en poudre.

**5.** Composition selon la revendication 1, dans laquelle le glucide est un sucre choisi dans le groupe constitué par le saccharose, le maltose, le tréhalose, le lactitol, l'isomalt, un disaccharide, un alcool d'un disaccharide, un mélange dextrose-maltodextrine, un mélange fructose-maltodextrine, un mélange sorbitol-maltodextrine, un mélange xylitol-maltodextrine, un mélange érythritol-maltodextrine, un mélange monosaccharide-maltodextrine et un alcool d'un mélange monosaccharide-maltodextrine.

**6.** Composition selon la revendication 1, dans laquelle le glucide comprend du saccharose, et dans laquelle le saccharose représente au moins 25 % en poids du glucide.

**7.** Composition selon la revendication 5, dans laquelle le glucide est un sucre et un ou plusieurs des éléments suivants : 20 équivalents de dextrose de solides de sirop de maïs, maltodextrine, fibres solubles, hydrocolloïdes, dérivés de cellulose, hydrolysats d'amidon ou amidon prégélatinisé.

**8.** Composition selon la revendication 1, dans laquelle le rapport pondéral des particules alimentaires au glucide est d'environ 1: 1 à environ 4: 1.

9. Composition selon la revendication 1, dans laquelle la fraction de surface du glucide est d'environ 30 % à environ 80%.

10. Composition selon la revendication 1, dans laquelle la pluralité de particules enrobées ont une forme sensiblement non sphérique et irrégulière.

11. Procédé de formation d'une composition enrobée comprenant :

   combiner une particule alimentaire et un glucide pour former un mélange de séchage par atomisation ; sélectionner la particule alimentaire pour avoir une taille de particule moyenne prédéterminée et affiner la particule alimentaire lorsque la particule alimentaire n'a pas la taille de particule moyenne prédéterminée ; et séchage par atomisation du mélange pour former une composition enrobée comprenant une pluralité de particules enrobées, et
   dans lequel la particule alimentaire comprend un mélange de poudre de cacao et une protéine sélectionnée dans le groupe formé par : la protéine de lactosérum, la protéine de soja, la protéine de riz, la protéine de fève, la protéine de lait et la protéine de pois, et dans laquelle un rapport pondéral entre le cacao non gras et la protéine est d'environ 3 ou plus.

12. Procédé selon la revendication 11, dans lequel la particule alimentaire et le glucide sont combinés dans de l'eau pour former un mélange en suspension.

13. Procédé selon la revendication 11, dans lequel la particule alimentaire est sélectionnée pour avoir une taille de particule moyenne inférieure à environ 25 $\mu$m.

14. Procédé selon la revendication 11, dans lequel la particule alimentaire comprend deux ou plusieurs types de particules alimentaires et le procédé comprend en outre le raffinage indépendant d'au moins l'un des deux ou plusieurs types de particules alimentaires pour avoir une taille de particule moyenne inférieure à environ 25 $\mu$m.

15. Procédé selon la revendication 11, dans lequel le mélange est raffiné pour fournir un mélange raffiné avec des particules ayant une taille de particule moyenne inférieure à environ 25 $\mu$m.

**FIG. 1**

22

22a

22b

# FIG. 2

24

**FIG. 3**

26

26a

26b

26c

**FIG. 4**

28

28a

28b

FIG. 5

30

30a

30b

# FIG. 6

32 ⌐

| 34 | 36 |
|---|---|
| Combine a food particle and a carbohydrate to form a spray-drying mixture | Select and/or refine one or more ingredients to have a predetermined average particle size |

38

Spray-dry to form a coated composition including spray-dried carbohydrate-coated particles

# FIG. 7

**EP 3 745 886 B1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2016242432 A1